# FASCICULE DE BREVET EUROPEEN

(11) **EP 3 687 856 B1**
(45) Date de publication et mention de la délivrance du brevet: **21.06.2023**
(21) Numéro de dépôt: 18774092.3
(22) Date de dépôt: 31.08.2018
(51) Int. Cl.: B60P 3/07, B60P 3/077

(54) **PLATEAU DE CHARGEMENT POUR VOITURE À TRAVERSE COULISSANTE DE TYPE PANIER**
LADEPLATTFORM FÜR EIN FAHRZEUG MIT EINEM GLEITENDEN QUERTRÄGER VOM KORBTYP
LOADING PLATFORM FOR A CAR WITH SLIDING CROSSMEMBER OF BASKET TYPE

(30) Priorité: 28.09.2017 FR 1759015
(43) Date de publication de la demande: 05.08.2020
(73) Titulaire: Lohr Industrie, 67980 Hangenbieten (FR)
(72) Inventeur: ANDRE, Jean-Luc, 67120 Molsheim (FR)
(74) Mandataire: Merckling, Norbert
(86) Numéro de dépôt international: PCT/FR2018/052138
(87) Numéro de publication internationale: WO 2019/063896

(56) Documents cités:
- EP-A1- 0 381 605
- WO-A1-2017/118829
- FR-A1- 2 573 014
- US-A1- 2003 147 732

## Description

### Domaine technique

La présente invention se rapporte à un plateau de chargement pour voiture prévu pour être monté mobile sur les longerons du plateau d'un véhicule porte-voitures.

L'invention peut également se rapporter à un plateau de chargement destiné à être chargé sur un véhicule porte-voitures, routier ou ferroviaire, par exemple un camion, un fourgon, une remorque, une semi-remorque, un convoi articulé ou un wagon, ou bien encore un conteneur de transport, lui-même placé par exemple sur une semi-remorque, un porte-conteneur ou un wagon.

### Etat de la technique

Les plateaux de chargement sont prévus pour supporter un véhicule dans son ensemble, par toutes ses roues, afin de pouvoir charger l'ensemble formé par chaque plateau de chargement et son véhicule sur un véhicule porte-voitures ou similaire, ce qui permet notamment de diminuer notablement le temps de chargement des véhicule porte-voitures et d'augmenter leur capacité de chargement en utilisant au mieux les possibilités d'imbrication des voitures.

Afin de diminuer le poids transporté et surtout d'optimiser le remplissage des véhicules porte-voitures en imbriquant le plus possible les véhicules adjacents sans laisser d'espace perdu, les plateaux de chargement ne sont généralement pas réalisés sous la forme d'une plaque pleine, mais plutôt sous la forme d'un cadre avec un espace libre central et deux zones de réception, une à l'avant et l'autre à l'arrière, pour supporter les roues de la voiture à transporter.

Un plateau de chargement de ce genre a par exemple été décrit dans le brevet EP 0381605 et dans le brevet FR 2 573 014 A1 tous les deux au nom de LOHR INDUSTRIE. Ce plateau de chargement présente une structure générale en cadre, formée de deux longerons, d'un platelage transversal à une extrémité et de deux barres transversales à l'autre extrémité. Un évidement central est ainsi délimité entre les longerons, le platelage et les barres transversales. Lorsqu'une voiture est chargée sur ce plateau de chargement, les roues de l'un de ses essieux reposent sur le platelage, alors que les roues de son deuxième essieu s'enfoncent entre les deux barres transversales d'écartement constant, qui forment entre elles une niche, de préférence à fond ouvert, destinée à accueillir et à bloquer les roues du véhicule transporté. Cette niche à fond ouvert est connue par l'homme du métier sous la désignation de panier, dans lequel les roues du véhicule à transporter sont logées et immobilisées par encastrement. Lorsqu'une traverse du plateau de chargement comprend ainsi deux paniers, on parle alors de traverse de type panier.

Avec une traverse de type panier, le véhicule à charger dans le porte-voiture peut circuler sur le plateau de chargement jusqu'à ce qu'une paire de ses roues se trouve encastrée dans une paire de paniers. Le chauffeur peut alors ajuster la position de la voiture, car tandis que les roues d'un essieu sont encastrées dans le panier, les roues de l'autre essieu sont laissées libres en rotation, ce qui permet de déplacer la voiture. Cette solution permet de déplacer les paniers en charge, ce qui simplifie les opérations de chargement.

Le problème est que les voitures présentent un gabarit différent selon les modèles. Elles ont ainsi un empattement (distance entre l'essieu avant et l'essieu arrière du véhicule), une voie (distance entre les deux roues d'un même essieu) et un diamètre de roue variables selon les modèles. Les petites voitures ont généralement un empattement et une voie étroite, avec des roues de faible diamètre de l'ordre de 530 mm par exemple, alors que les gros véhicules ont au contraire un empattement et une voie larges, avec des roues de diamètre beaucoup plus important pouvant aller par exemple jusqu'à 800 mm pour une limousine ou un 4x4, toutes les configurations intermédiaires pouvant également être rencontrées.

Or, les plateaux de chargement décrits dans l'art antérieur présentent généralement des structures de réception pour les roues qui sont fixes. Ces plateaux de chargement ne peuvent donc pas s'adapter aux différents gabarits des voitures qu'elles sont censées transporter.

Dans le cas de plateaux amovibles, différents modèles de plateaux peuvent être utilisés selon les besoins. Cependant, cette situation génère un surcoût important lié à l'achat des différents jeux de plateau, et complique le stockage et la gestion des stocks de plateaux.

Enfin, dans le cas de traverses de l'art antérieur, elles doivent être positionnées au bon endroit avant le chargement, ce qui définit la position de la voiture. Toute erreur demande un déchargement total ou partiel du convoi pour corriger l'emplacement, ce qui est particulièrement désavantageux.

Un but de l'invention est de fournir un plateau de chargement qui permet le chargement d'une voiture quel que soit son empattement et sa voie.

Un autre but de l'invention est également de permettre l'ajustement de la position d'une voiture sur le plateau de chargement une fois le convoi chargé.

Par le brevet EP 0183632 au nom de LOHR S.A. on connait des structures des structures transversales porteuses similaires à des traverses de type panier, mais celles-ci ne font pas partie d'un plateau de chargement au sens de l'invention car elles ne sont prévues que pour porter deux roues d'un véhicule et non pas le véhicule dans son ensemble par toutes ses roues. Ces structures transversales porteuses individuelles destinées à supporter deux roues d'un véhicule permettent bien d'imbriquer le plus possible les véhicules adjacents dans un véhicule porte-voitures sans laisser d'espace perdu tout en s'adaptant aux différents gabarits des voitures. Cependant, ces structures transversales ne permettent pas de charger directement un véhicule dans son ensemble sur un véhicule ou conteneur porte-voitures comme c'est le cas lorsqu'un tel véhicule est porté par un plateau. Les structures transversales du brevet EP 0183632 sont d'ailleurs prévues pour se dispenser de tout type de plateau de chargement. Enfin, ce document ne divulgue aucun mécanisme de manoeuvre permettant de déplacer une traverse de type panier en éloignement ou en rapprochement longitudinal d'une deuxième zone-support pour les roues.

Par la demande WO 2017/118829 au nom de LOHR INDUSTRIE, on connait une palette repliable de chargement à deux niveaux de chargement, comprenant deux plateaux de chargement au sens de l'invention, le plateau supérieur comportant un support de roue avant similaire à une traverse de type panier qui est déplaçable longitudinalement. Cette palette repliable, prévue pour le chargement de deux véhicules et non pas d'un seul, ne divulgue cependant aucun mécanisme de manoeuvre permettant de déplacer le support de roue avant en éloignement ou en rapprochement longitudinal du support de roue arrière.

Pour s'adapter à divers empattements, dans le domaine des plateaux de chargement pour véhicule porte-voitures, il est connu de prévoir une rallonge longitudinale en extrémité d'un plateau, cette rallonge longitudinale étant le plus souvent mobile en éloignement et en rapprochement longitudinal par rapport au reste du plateau.

Une technique connue consiste à prévoir cette rallonge longitudinale sous la forme d'un tiroir équipé d'une glissière qui coulisse sur la traverse. Ce coulissement de tiroir, dont la longueur de guidage est très courte, conduit souvent à un arc-boutement puis à un coincement du tiroir. Cette situation peut s'aggraver si une des glissières du tiroir est grippée. Aussi, cette solution à tiroir n'est pas avantageuse. De plus ces tiroirs ne créent pas d'espace libre sous la voiture pour encastrer un capot par exemple d'une voiture adjacente.

Il est connu de manoeuvrer ces rallonges longitudinales au moyen d'un actionneur, généralement un vérin hydraulique, pneumatique ou électrique. Afin d'équilibrer les charges, cet actionneur est généralement prévu au centre des rallonges longitudinales. Ce positionnement n'empêche pas toujours les rallonges longitudinales de se bloquer, notamment lorsque les guidages de ces rallonges sont courts. Lorsque les rallonges longitudinales sont manoeuvrées en charge, et que ladite charge est décentrée, la situation est aggravée.

En outre, la présence de l'actionneur au milieu de la rallonge est une contrainte, en particulier dans le cas de transport de voiture, lorsque l'on cherche à imbriquer au maximum les voitures. Ainsi, lorsqu'un actionneur se trouve au milieu d'un plateau de chargement, sa présence ne permet par exemple pas de positionner un véhicule en dessous au plus près du plateau de chargement.

Afin d'éviter la présence d'un actionneur unique au milieu de la rallonge, il est parfois possible de prévoir un actionneur chaque côté de la traverse, par exemple les long des glissières. Cependant, afin d'obtenir un déplacement parallèle, il est nécessaire que les deux actionneurs travaillent de manière synchronisée. Une solution connue consiste par exemple à gérer les déplacements des tiges des vérins par l'ajout d'un diviseur de débit. Il est cependant évident pour l'homme du métier que ces solutions sont onéreuses, fragiles, peu fiables et difficiles à installer.

Un but de l'invention est également de fournir un plateau de chargement comportant une traverse de type panier qui puisse être déplacée, notamment en charge, de manière sûre, fiable et peu coûteuse en éloignement et en rapprochement longitudinal par rapport au plateau de chargement.

### Description de l'invention

L'objet de la présente invention vise par conséquent à pallier les inconvénients de l'art antérieur en proposant un nouveau plateau de chargement comportant au moins une traverse de type panier et équipé d'un mécanisme de manoeuvre permettant de déplacer longitudinalement au moins une traverse de type panier par rapport au plateau de chargement de manière sûre, fiable et peu coûteuse, sans risque de mise de travers, de coincement ou de blocage de la traverse de type panier.

Les objets assignés à l'invention sont atteints à l'aide d'un plateau de chargement destiné à supporter les quatre roues d'une voiture et à être chargée sur un véhicule ou conteneur porte-voitures, et comprenant :
- deux longerons longitudinaux et latéraux reliés mécaniquement entre eux par des éléments transversaux,
- une première zone-support d'extrémité située au niveau d'une première extrémité du plateau de chargement,
- une deuxième zone-support d'extrémité située au niveau d'une deuxième extrémité du plateau de chargement, et
- un espace central libre situé entre les longerons, la première zone-support d'extrémité et la deuxième zone-support d'extrémité,
- la première zone-support d'extrémité comprend une première traverse de type panier qui relie les deux longerons, cette traverse de type panier étant mobile en coulissement ou de manière télescopique par des bras longitudinaux sur les deux longerons, ladite traverse de type panier comportant un panier au niveau de chacune de ses extrémités latérales, ces deux paniers étant situés entre les deux longerons, ces paniers étant chacun formés par une niche réceptrice dans laquelle les roues d'un premier train de roues de la voiture s'enfoncent et se retrouvent calées en position de transport ;
- la deuxième zone-support d'extrémité comprend un platelage ou une seconde traverse de type panier qui relie les deux longerons, prévu pour supporter les roues d'un deuxième train de roues de la voiture lorsque les roues du premier train de roue sont enfoncées et calées dans les paniers de la première traverse de type panier ;
- le plateau de chargement comporte un mécanisme de manoeuvre relié mécaniquement à la première traverse de type panier pour la déplacer en éloignement et en rapprochement longitudinal par rapport à la deuxième zone-support d'extrémité ; ce mécanisme de manoeuvre comprenant :
   - des pignons de translation, ces pignons de translation étant montés en rotation de part et d'autres de la traverse de type panier et faisant saillie de ladite traverse de type panier pour s'engrener dans des encoches prévues dans les longerons du plateau de chargement, ou étant montés en rotation dans les longerons longitudinaux et latéraux et s'engrenant dans des encoches ou des crémaillères prévues dans les bras longitudinaux de la traverse de type panier,
   - un élément cinématique de liaison qui relie directement ou indirectement les pignons de translation et assure le synchronisme entre les pignons de translation, et
   - au moins un actionneur relié à l'élément cinématique de liaison ou à la traverse de type panier, qui, lorsqu'il est actionné, provoque directement ou indirectement le déplacement de la traverse de type panier en éloignement ou rapprochement longitudinal par rapport à la deuxième zone-support d'extrémité.

Par l'usage d'un plateau de chargement destiné à supporter un véhicule par l'ensemble de ses roues, l'invention permet de charger directement un véhicule dans son ensemble sur un véhicule ou conteneur porte-voitures tout en imbriquant le plus possible les véhicules adjacents dans ledit véhicule ou conteneur porte-voitures sans laisser d'espace perdu. Par l'usage d'une traverse de type panier mobile en coulissement longitudinal ou par des bras télescopiques en éloignement ou en rapprochement longitudinal d'une deuxième zone-support pour les roues, le plateau de chargement de l'invention s'adapte aux différents gabarits des voitures. Grâce au mécanisme de manoeuvre permettant de déplacer la traverse de type panier en éloignement ou en rapprochement, ce déplacement peut être effectué de manière motorisée, de manière plus fiable et sans risque pour l'opérateur, avec une force mécanique permettant notamment de déplacer la traverse de type panier même lorsque les roues d'un véhicule sont chargées dans ladite traverse de type panier. Grâce à ce mécanisme de manoeuvre, il est notamment possible d'utiliser le plateau de chargement de l'invention dans un système automatisé dans lequel l'adaptation en longueur du plateau de chargement de l'invention aux différents gabarits des voitures est effectuée de manière automatisée.

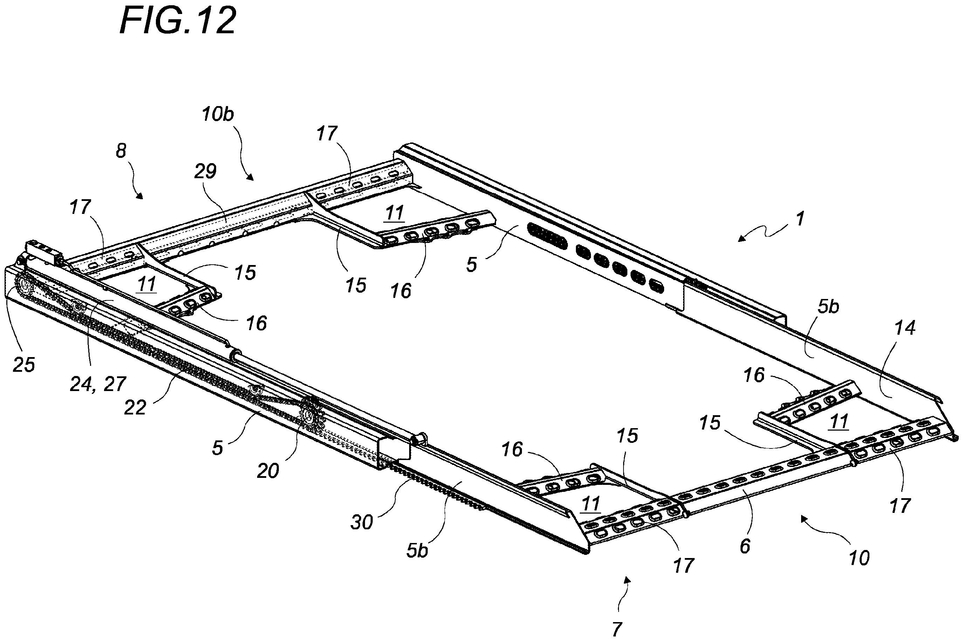

On notera que sur les dessins 1 à 11, la traverse de type panier est représenté mobile en coulissement sur les deux longerons. De manière équivalente, la traverse de type peut également être montée de manière télescopique sur les deux longerons, comme cela apparaît sur la figure 12. Dans ce cas elle comprend préférentiellement des bras longitudinaux qui sont montés télescopiques sur les extrémités des deux longerons. En effet, dans le cadre de l'invention, la traverse de type panier doit être montée mobile en éloignement ou en rapprochement des deux longerons par tout moyen pouvant être envisagé. Elle doit cependant être solidement et fermement montée sur lesdits longerons afin de pouvoir supporter l'essieu d'un véhicule. Les montages coulissant et télescopique ne sont que des exemples.

Selon un exemple de mise en oeuvre de l'invention, chaque panier est sous la forme de deux appui-roues transversaux reliés entre eux par deux éléments longitudinaux parallèles aux longerons.

Selon un autre exemple de mise en oeuvre de l'invention, chaque panier est de forme trapézoïdale, le côté le plus court de chaque trapèze étant dirigé vers l'intérieur du plateau de chargement. Cette forme trapézoïdale permet avantageusement à chaque panier de s'adapter aux empattements et voies variables des différentes voitures.

Selon un exemple supplémentaire de mise en oeuvre de l'invention, au niveau de la première zone-support d'extrémité, les deux longerons présentent des encoches faisant office de crémaillère et le mécanisme de manoeuvre comprend les moyens suivants :
- un mécanisme à engrenages qui équipe chacun des paniers, comprenant chacun au moins une poulie ou un engrenage d'entraînement et au moins un pignon de translation faisant saillie latéralement vers l'extérieur en dehors dudit panier et engrené dans les encoches situées en vis-à-vis, ladite poulie d'entraînement ou ledit engrenage d'entraînement et ledit pignon de translation étant reliés mécaniquement en rotation ;
- un élément cinématique de liaison relié cinématiquement à la poulie ou à l'engrenage d'entraînement de chacun des deux mécanismes à engrenages de sorte que l'élément cinématique de liaison assure la rotation synchronisée des poulies ou engrenages d'entraînement ;
- au moins un actionneur relié à l'élément cinématique de liaison pour l'entraîner à rotation autour des poulies ou engrenages d'entraînement ou relié à la traverse de type panier pour la déplacer longitudinalement de sorte que, lorsque l'actionneur est actionné, la traverse de type panier se déplace longitudinalement en éloignement ou rapprochement par rapport aux deux longerons.

Ce mécanisme, qui est avantageusement fiable, sûr, mécaniquement résistant et peu coûteux, permet avantageusement de garantir le parallélisme de la translation de la traverse de type panier par rapport au plateau de chargement.

Selon un exemple de mise en oeuvre de l'invention, les encoches sont découpées dans les longerons ou sont rapportées sur ceux-ci par soudage. Ces encoches sont préférentiellement prévues sur la face interne des longerons.

Selon un exemple supplémentaire de mise en oeuvre de l'invention, chaque mécanisme à engrenages comporte une poulie ou un engrenage d'entraînement relié mécaniquement en rotation à un engrenage de renvoi, lequel engrenage de renvoi est relié(e) mécaniquement en rotation à un pignon de translation. Cet engrenage de renvoi permet de s'assurer que les pignons de translation d'une même traverse de type panier tournent dans un sens opposé lorsque ladite traverse de type panier est déplacée en translation longitudinale, ce qui assure le synchronisme et le parallélisme de la translation de la traverse de type panier par rapport au plateau de chargement.

Selon un autre exemple de mise en oeuvre de l'invention, l'élément cinématique de liaison comprend une chaîne de liaison, un câble, une courroie crantée ou non, une sangle ou un arbre de liaison.

Selon un exemple de mise en oeuvre de l'invention, au moins un actionneur est un vérin hydraulique, pneumatique ou électrique, un levier actionné manuellement, ou un moteur hydraulique, électrique ou pneumatique.

Selon un autre exemple de mise en oeuvre de l'invention, au moins un actionneur est prévu transversalement dans la traverse de type panier, sa tige de vérin étant reliée à l'élément cinématique de liaison pour l'entraîner autour desdit(e)s poulies ou engrenages d'entraînement dans un sens ou dans l'autre selon que la tige de vérin est déplacée en sortie ou en rentrée.

Cette configuration permet avantageusement de dissimuler et de protéger l'actionneur, de simplifier son installation sur le plateau de chargement et, en choisissant les bons modules des engrenages, de surmultiplier la course de l'actionneur lorsqu'il s'agit d'un vérin.

Selon un exemple supplémentaire de mise en oeuvre de l'invention, chaque mécanisme à engrenages surmultiplie la course de la tige du vérin, par exemple les deux mécanismes à engrenages surmultiplient la course de la tige du vérin dans un rapport compris entre 1,1 et 2, préférentiellement compris entre 1,2 et 1,8, plus préférentiellement dans un rapport d'environ 1,5.

Cette surmultiplication de la course du vérin permet avantageusement de permettre une grande ampleur de déplacement longitudinal pour la traverse de type panier.

Selon un exemple de mise en oeuvre de l'invention, au moins un actionneur est prévu longitudinalement de manière décentrée par rapport au plateau de chargement, ledit actionneur étant relié au niveau d'un des côtés de la traverse de type panier pour la déplacer longitudinalement.

Cette configuration permet avantageusement de dissimuler et de protéger l'actionneur au niveau des longerons et ne pas encombrer l'espace central du plateau de chargement.

Selon un autre exemple de mise en oeuvre de l'invention, au moins un actionneur est prévu longitudinalement dans un longeron.

Selon un exemple supplémentaire de mise en oeuvre de l'invention, au moins un actionneur est prévu longitudinalement de manière centrée par rapport au plateau de chargement, ledit actionneur étant relié sensiblement au milieu de la traverse de type panier pour la déplacer longitudinalement.

Cette configuration permet avantageusement de peu solliciter le synchronisme du mécanisme à engrenages, mais présente l'inconvénient d'encombrer l'espace central du plateau de chargement.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en perspective de dessus d'un véhicule porte-voitures équipé de plateaux de chargement selon l'invention ;
- la figure 2 est une vue d'ensemble en perspective de dessus d'un plateau de chargement selon l'invention ;
- la figure 3 est une vue de détail en perspective de dessous d'un plateau de chargement selon une première variante de l'invention dans laquelle la traverse de type panier est déplacée en coulissement au moyen d'un vérin transversal logé dans la traverse de type panier ;
- la figure 4 est une vue d'ensemble en perspective de dessous de la traverse de type panier de la figure 3 ;
- la figure 5 est une autre vue d'ensemble en perspective de dessous de la traverse de type panier de la figure 3 ;
- la figure 6 est une vue de détail de la partie gauche de la figure 5 ;
- la figure 7 est une vue de détail de la partie droite de la figure 5 ;
- la figure 8 est une vue d'ensemble en perspective de dessus d'un plateau de chargement selon une seconde variante de l'invention dans laquelle la traverse de type panier est déplacée en coulissement au moyen d'un vérin longitudinal centré ;
- la figure 9 est une vue d'ensemble en perspective de dessus de la traverse de type panier de la figure 8 ;
- la figure 10 est une vue de détail en perspective de dessous d'un plateau de chargement selon une troisième variante de l'invention dans laquelle la traverse de type panier est déplacée en coulissement au moyen d'un vérin longitudinal décentré ;
- la figure 11 est une vue d'ensemble en perspective de dessus d'une traverse de type panier selon la troisième variante de l'invention ; et
- la figure 12 est une vue d'ensemble en perspective de dessus d'un plateau de chargement selon l'invention selon une variante comportant deux traverse de type panier, dont une montée télescopique sur les longerons.

### Mode(s) de réalisation de l'invention

Les éléments structurellement et fonctionnellement identiques présents sur plusieurs figures distinctes, sont affectés d'une même référence numérique ou alphanumérique.

Par voiture, on entendra ici tout véhicule à quatre roues habituellement transporté sur un véhicule ou conteneur porte-voitures.

Par longitudinal on se référera à une direction correspondant au sens de déplacement habituel des véhicules porte-voitures et des voitures pour leur chargement, tandis que par transversal on se référera à une direction horizontale qui est perpendiculaire à la direction longitudinale.

L'invention concerne un plateau de chargement (1) destiné à supporter les quatre roues (2) d'une voiture (3) et à être chargé ou fixé sur un véhicule ou conteneur porte-voiture (4).

Le plateau de chargement (1) peut être un plateau de chargement (1) individuel ou une zone sur un plan de chargement de plusieurs voitures. Ainsi, sur les figures, le plateau de chargement (1) est uniquement représenté sous la forme d'un plateau individuel à titre d'exemple. Ledit plateau de chargement (1) peut présenter n'importe quelle forme du moment qu'il comporte deux longerons latéraux et qu'il est destiné à supporter les quatre roues (2) d'une voiture (3) et à être monté sur un véhicule ou conteneur porte-voiture (4).

Ce plateau de chargement (1) comprend deux longerons (5) longitudinaux et latéraux reliés mécaniquement entre eux par des éléments transversaux (6), une première zone-support d'extrémité (7) située au niveau d'une première extrémité du plateau de chargement (1), une deuxième zone-support d'extrémité (8) située au niveau d'une deuxième extrémité du plateau de chargement (1), et un espace central libre (9) situé entre les longerons (5), la première zone-support d'extrémité (7) et la deuxième zone-support d'extrémité (8).

Chacune des zones supports d'extrémité (7, 8) est prévue pour recevoir les roues (2) d'un essieu d'une même voiture (3).

La première zone-support d'extrémité (7) se particularise en ce qu'elle comprend une traverse de type panier (10) qui relie les deux longerons (5).

Par traverse de type panier (10) on entend une pièce transversale prévue pour recevoir chacune des deux roues (2) d'un même essieu ou train de roues d'une voiture (3) dans un panier (11), chacun de ces deux paniers (11) étant formés par une niche réceptrice dans laquelle les roues (2) s'enfoncent partiellement et se retrouvent calées en position de transport.

La traverse de type panier (10) comporte un panier (11) au niveau de chacune de ses extrémités latérales (12, 13), ces deux paniers (11) étant situés entre les deux longerons (5) et reliées par un élément transversal (6).

La niche réceptrice de chaque panier (11) peut être formée par un évidement conformé dans la traverse de type panier (10), le panier (11) étant alors à fond ouvert, ou par une déformation concave conformée vers le bas dans la traverse de type panier (10), le panier (11) étant alors à fond fermé. Chaque panier (11) présente préférentiellement une largeur (transversale) supérieure à la largeur d'une roue (2) afin de pouvoir s'adapter aux dimensions de tout type de voiture (3) à porter sur le plateau de chargement (1).

Chaque panier (11) présente également préférentiellement une longueur (longitudinale) inférieure au diamètre minimal habituel d'une roue (2) afin que les roues (2) d'une voiture (3) portée sur le plateau de chargement (1) ne puissent pas passer entièrement au travers des paniers (11) mais soient retenues par les rebords longitudinaux (14, 15) de chaque panier (11).

Chaque panier (11) est préférentiellement sous la forme de deux appui-roues transversaux (16, 17) reliés entre eux par deux rebords longitudinaux (14, 15) parallèles aux longerons (5). Chaque panier (11) est préférentiellement de forme trapézoïdale, le côté (15) le plus court de chaque trapèze étant dirigé vers l'intérieur du plateau de chargement (1). En effet, les petites voitures sont généralement à voie étroite et avec des petites roues. La forme en trapèze est aussi favorable pour améliorer l'encastrement d'un pare-brise généralement bombé.

Chaque appui-roues (16, 17), contre lequel viennent en butée les roues (2) avant ou arrière de la voiture (3), se présente de préférence sous la forme d'un plan incliné, montant en direction de l'extrémité du plateau de chargement (1), et préférentiellement réalisé en tôle perforée ou en un autre matériau antidérapant.

La traverse de type panier (10) présente préférentiellement une forme générale symétrique par rapport à un plan médian vertical qui sépare la moitié gauche de la moitié droite de la traverse de type panier (10).

Dans le cas présenté sur les figures, la deuxième zone-support d'extrémité (8) comprend un platelage (18) prévu pour supporter les roues (2) d'un deuxième train de roues de la voiture (3) lorsque les roues (2) du premier train de roue sont enfoncées et calées dans les paniers (11).

Par platelage (18) on entend un assemblage sensiblement horizontal de tôles ou de plaques métalliques, admettant le passage des voitures (3), et habituellement conformé avec des perforations.

Ce platelage (18) comprend préférentiellement deux assemblages de tôles ou de plaques métalliques de forme sensiblement rectangulaire positionnés chacun au niveau du passage des roues (2), et maintenus entre eux par des traverses de manière à laisser un espace central libre (9) entre eux.

Le platelage (18) et les éléments transversaux (6) sont préférentiellement réalisés en tôle perforée ou en matériau antidérapant.

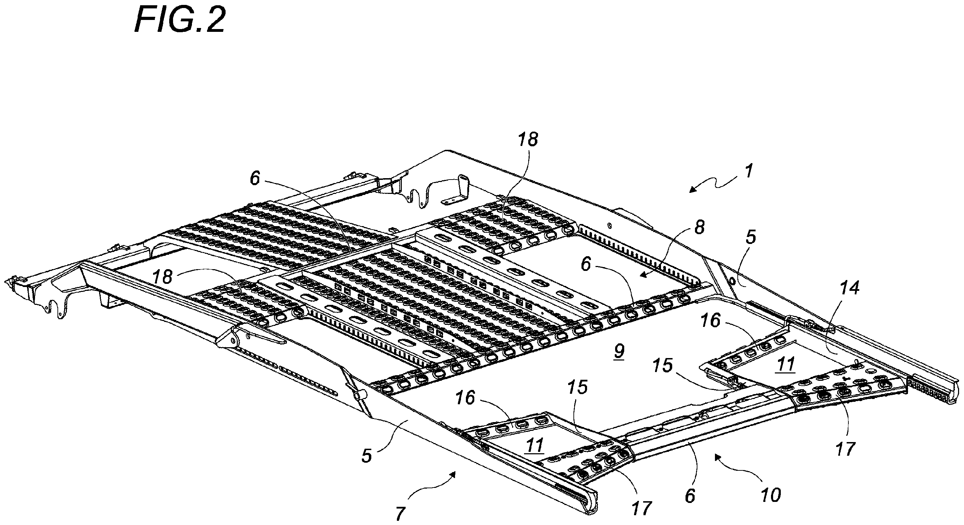

Le platelage (18) peut être monté de manière articulée sur le plateau de chargement (1) de sorte de pouvoir être pivoté verticalement et servir de rampe pour le chargement des voitures (3) sur ledit plateau de chargement (1). Sur la figure 2, c'est tout le plateau de chargement (1) qui est monté articulé, le platelage (18) faisant partie du plateau de chargement (1).

Sur cette figure 2 donnée à titre d'exemple uniquement, le plateau de chargement (1) comprend le platelage (18), les deux longerons (5) longitudinaux et la traverse de type panier (10).

Selon un autre mode de réalisation non représenté, le platelage (18) peut être remplacé par une autre traverse de type panier (10) mobile ou fixe. Si elle est mobile elle peut être motorisée ou non.

Ainsi, selon une variante non représentée de l'invention, le plateau de chargement (1) selon l'invention peut également comporter une traverse de type panier (10) au niveau de la deuxième zone-support d'extrémité (8). Cette seconde traverse de type panier (10), similaire à celle de la première zone-support d'extrémité (7), vient alors en remplacement dudit platelage (18).

Selon une particularité de l'invention, au moins une traverse de type panier (10) du plateau de chargement (1) selon l'invention est mobile en éloignement ou en rapprochement longitudinal sur les deux longerons (5) longitudinaux du plateau de chargement (1).

En outre, le plateau de chargement (1) comporte un mécanisme de manoeuvre (19), par exemple motorisé, relié mécaniquement à la traverse de type panier (10) pour la déplacer en éloignement et en rapprochement longitudinal par rapport au plateau de chargement (1), ou plus exactement par rapport à la deuxième zone-support d'extrémité (8) lorsque le mécanisme de manoeuvre (19) est relié mécaniquement à la première la traverse de type panier (10).

De manière similaire, si la deuxième zone-support d'extrémité (8) est équipée d'une traverse de type panier (10), un mécanisme de manoeuvre (19) peut être prévu pour la déplacer en éloignement et en rapprochement longitudinal par rapport à la première zone-support d'extrémité (7). Dans ce cas, un même mécanisme de manoeuvre (19) peut être prévu pour déplacer à la fois la première et la seconde traverse de type panier (10), ou bien chaque traverse de type panier (10) peut être déplacée par un mécanisme de manoeuvre (19) qui lui est propre.

Ceci permet notamment d'adapter le plateau de chargement (1) à l'empattement de la voiture (3) qu'il supporte.

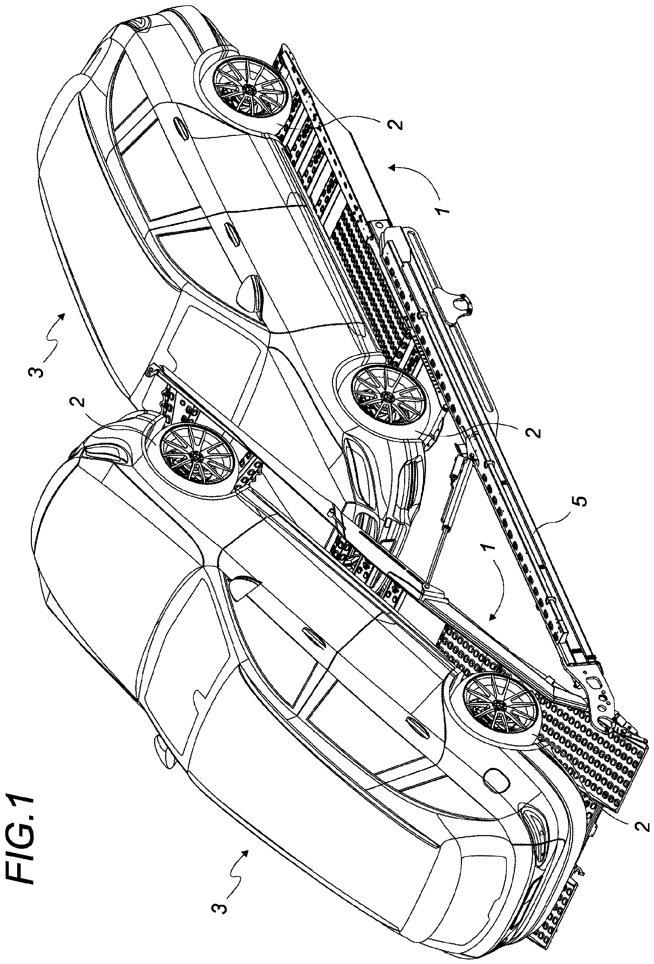

Le mécanisme de manoeuvre (19) permet notamment de déplacer le plateau de chargement (1) en charge. Par exemple, une fois les roues (2) d'un train de roues d'une voiture (3) immobilisées dans les paniers (11) de la traverse de type panier (10), le déplacement de la traverse de type panier (10) au moyen du mécanisme de manoeuvre (19) permet de déplacer la voiture (3) en faisant circuler les roues (2) de l'autre train de roues, par exemple en roue libre, sur le platelage (18) jusqu'à ce que la voiture (3) ait la position souhaitée sur le plateau de chargement (1) (voir figure 1), l'autre essieu roulant librement sur le platelage (18) ou entraînant l'autre traverse panier dans le cas où l'autre essieu est porté par un deuxième jeu de traverse de type panier.

Le mécanisme de manoeuvre (19) permet de déplacer longitudinalement la traverse de type panier (10) par rapport au plateau de chargement (1) de manière sûre, fiable et peu coûteuse, sans risque de mise de travers, de coincement ou de blocage de la traverse de type panier (10).

De manière générale, le principe de fonctionnement du mécanisme de manoeuvre (19) repose sur des pignons de translation (20) qui sont montés en rotation de part et d'autres de la traverse de type panier (10), ces pignons de translation (20) faisant saillie de ladite traverse de type panier (10) pour s'engrener dans des encoches (21) prévues dans les longerons (5) du plateau de chargement (1). Le synchronisme est réalisé par un élément cinématique de liaison (22), comprenant préférentiellement une chaîne de liaison (22) de type chaine de moto montée à rotation de sorte d'entraîner les pignons de translation (20) à rotation.

Par exemple, l'élément cinématique de liaison (22) peut également être comprendre un câble, une courroie crantée ou non, une sangle, un arbre de liaison, ou toute autre élément cinématique de liaison similaire.

Le parallélisme de la translation de la traverse de type panier (10) par rapport au plateau de chargement (1) est assuré par les rotations identiques des pignons de translation (20) en engrènement dans les encoches (21) faisant office de crémaillères et reliés directement ou indirectement par l'élément cinématique de liaison (22).

Ainsi, selon un mode de réalisation préféré de l'invention, au niveau de la première zone-support d'extrémité (7), les deux longerons (5) présentent des encoches (21) faisant office de crémaillère. Ces encoches (21) peuvent être directement découpées dans les longerons (5) ou être rapportées sur ceux-ci, par exemple par soudage. Les encoches (21) sont préférentiellement prévues sur la face interne des longerons (5)

Selon ce mode de réalisation préféré de l'invention, le mécanisme de manoeuvre (19) comprend deux mécanismes à engrenages (23), un élément cinématique de liaison (22) et au moins un actionneur (24).

Un mécanisme à engrenages (23) est prévu au niveau de chacun des paniers (11), comprenant chacun au moins une poulie ou un engrenage d'entraînement (25) et au moins un pignon de translation (20) faisant saillie latéralement vers l'extérieur en dehors dudit panier (11) et engrené dans les encoches (21) situées en vis-à-vis. La poulie ou l'engrenage d'entraînement (25) et ledit pignon de translation (20) sont reliés mécaniquement en rotation au sein de chaque mécanisme à engrenages (23).

L'élément cinématique de liaison (22) est relié à la poulie ou à l'engrenage d'entraînement (25) de chacun des deux mécanismes à engrenages (23) de sorte que l'élément cinématique de liaison (22) assure la rotation synchronisée des poulies ou engrenages d'entraînement (25). Ce synchronisme à élément cinématique de liaison (22) assure un déplacement parallèle de la traverse de type panier (10) par rapport au plateau de chargement (1), notamment dans le cas d'efforts décentrés.

L'élément cinématique de liaison (22), lorsqu'il est sous la forme d'une chaîne de liaison (22) ou d'une courroie crantée est engrené sur un engrenage d'entraînement (25). Lorsqu'il est sous la forme d'un câble, d'une courroie non-crantée ou d'une sangle, l'élément cinématique de liaison (22), est monté sur une poulie d'entraînement.

Un élément cinématique de liaison (22) sous la forme d'une chaîne de type chaîne de moto, engrené sur un élément d'entraînement sous la forme d'un engrenage d'entraînement (25) est préféré en ce qu'il est résistant et garantit une excellente transmission cinématique des mouvements.

La poulie ou l'engrenage d'entraînement (25) et l'au moins un pignon de translation (20) qui lui est associé peuvent être prévus dans le même plan horizontal avec leurs dents mutuellement engagées ou reliés par un élément cinématique de liaison supplémentaire, ou être solidarisé l'un au-dessus ou au-dessous de l'autre, de sorte que la rotation de l'un entraîne la rotation de l'autre.

Un renvoi par exemple peut être prévu d'un côté de la traverse de type panier (10) pour obtenir le bon sens de rotation des pignons de translation (20), c'est-à-dire de sorte que les pignons de translation (20) d'une même traverse de type panier (10) tournent dans un sens opposé lorsque ladite traverse de type panier (10) est déplacée en translation longitudinale.

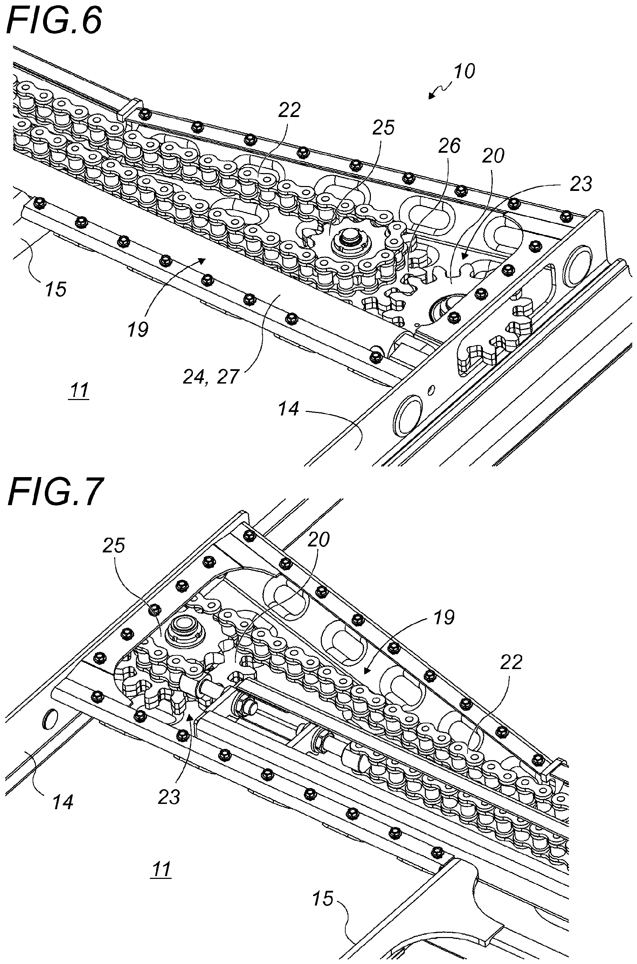

Ainsi, tel que cela est représenté sur la figure 6, un des mécanismes à engrenages (23) peut comporter une poulie ou un engrenage d'entraînement (25) relié(e) mécaniquement en rotation à un engrenage de renvoi (26), lequel engrenage de renvoi (26) est relié mécaniquement en rotation à un pignon de translation (20). Chacun de ces engagements en rotation d'éléments mécaniques pivotants (20, 25, 26), poulies, engrenages et/ou pignons, peut être réalisé par une situation desdits éléments mécaniques pivotants (20, 25, 26) dans le même plan horizontal par l'engagement mutuel de leurs dents, par leur association mécanique au moyen d'un élément cinématique de liaison (22) liaison ou par solidarisation l'un au-dessus ou au-dessous de l'autre des éléments mécaniques pivotants (20, 25, 26).

Dans le cas où l'élément cinématique de liaison (22) est un câble ou un autre élément cinématique de liaison (22) suffisamment fin, le bon sens de rotation des pignons de translation (20) peut par exemple être obtenu en croisant ledit câble, de sorte que celui-ci soit en forme de huit.

L'au moins un actionneur (24) est préférentiellement un vérin (27) hydraulique, pneumatique ou électrique, mais il peut s'agir de tout autre moyen permettant de déplacer directement ou indirectement la traverse de type panier (10) en éloignement ou en rapprochement longitudinal.

Bien que cette solution soit a priori peu intéressante, l'au moins un actionneur (24) peut ainsi être un simple levier actionné manuellement pour pousser la traverse de type panier (10) en prenant appui sur les longerons (5) ou un autre partie fixe du plateau de chargement (1). Cette solution ne permet pas de déplacer la voiture, mais permet par contre au chauffeur de régler la position de la traverse de type panier (10) avant le chargement en ne la manoeuvrant que d'un seul côté, ce qui est être ergonomique.

L'au moins un actionneur (24) peut également être un moteur, de préférence hydraulique, électrique ou pneumatique qui entraîne directement ou indirectement la poulie ou l'engrenage d'entraînement (25) en rotation.

Un pignon ou une courroie supplémentaire peut être ajouté(e) au sein de chaque mécanisme à engrenage (23) afin de faire l'interface entre l'actionneur (24) et les autres éléments mécanique qui entraînent les pignons de translation (20) à rotation, ce pignon ou cette courroie supplémentaire étant alors dédié(e) à l'entrainement.

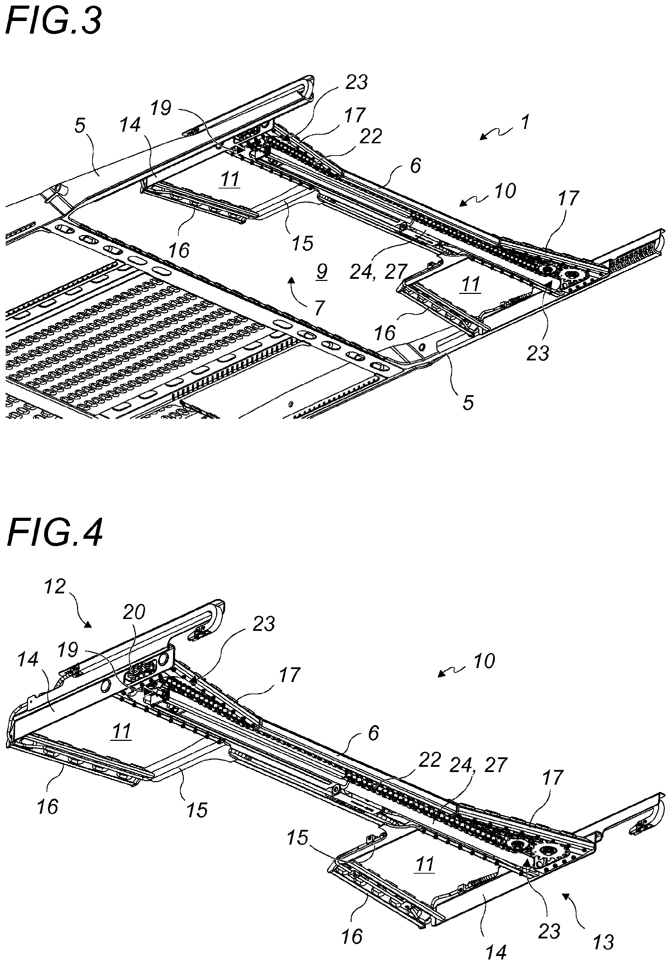

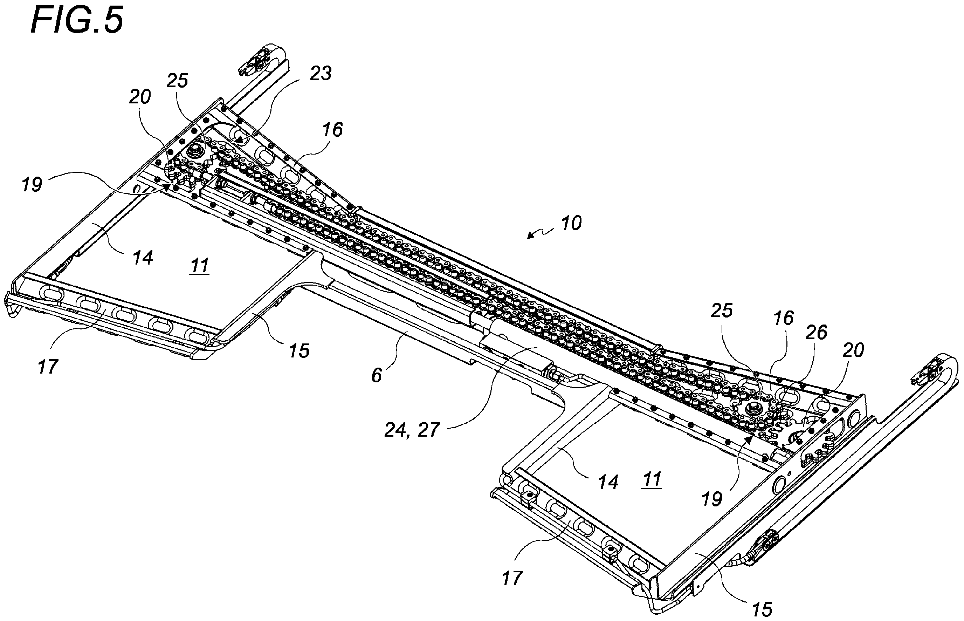

Selon une première variante représentée sur les figures 3 à 7, l'au moins un actionneur (24) peut être relié à l'élément cinématique de liaison (22) pour l'entraîner autour desdit(e)s poulies ou engrenages d'entraînement (25), de sorte que, lorsque l'actionneur (24) est actionné, la traverse de type panier (10) coulisse longitudinalement sur les deux longerons (5) ou se déplace par rapport à ceux-ci si elle est prévue déplaçable par des bras montés de manière télescopique dans lesdits longerons (5). Selon cette variante, l'actionneur (24) entraîne l'élément cinématique de liaison (22) qui assure à la fois la translation de la traverse de type panier (10) en plus du synchronisme. Il s'agit alors préférentiellement d'un vérin (27) transversal intégré dans la traverse de type panier (10), ce qui permet de le protéger et de réduire l'encombrement qu'il représente. Ainsi, la tige de vérin (27) est reliée à l'élément cinématique de liaison (22) pour l'entraîner autour desdit(e)s poulies ou engrenages d'entraînement (25) dans un sens ou dans l'autre selon que la tige de vérin (27) est déplacée en sortie ou en rentrée. Avantageusement, les poulies ou engrenages (25, 26) et/ou pignons (20) des mécanismes à engrenages (23) peuvent être dimensionnés de manière à surmultiplier la course de la tige du vérin (27), par exemple dans un rapport compris entre 1,1 et 2, préférentiellement compris entre 1,2 et 1,8, plus préférentiellement dans un rapport d'environ 1,5.

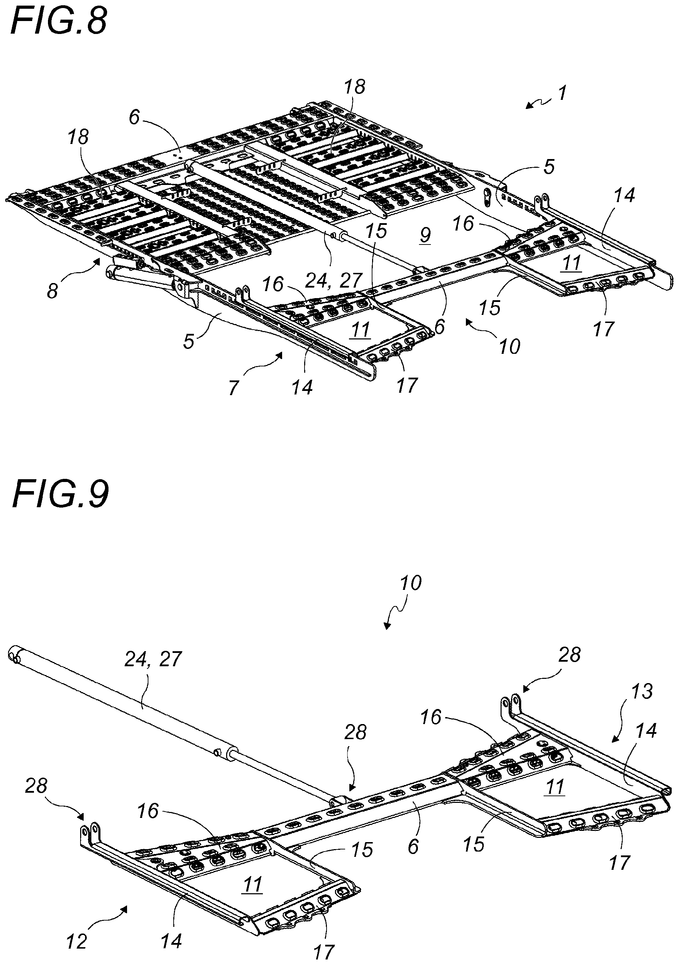

Selon d'autres variantes représentée sur les figures 8 à 11, l'au moins un actionneur (24) peut être relié à la traverse de type panier (10) pour la déplacer longitudinalement en agissant directement sur celle-ci en poussée ou en traction, de sorte que, lorsque l'actionneur (24) est actionné, la traverse de type panier (10) se déplace longitudinalement par rapport aux deux longerons (5). Il s'agit alors préférentiellement d'un vérin (27) longitudinal fixé entre la traverse de type panier (10) et une partie fixe du plateau de chargement (1), utilisé pour motoriser le déplacement de la traverse de type panier (10), le mécanisme à engrenages (23) et l'élément cinématique de liaison (22) assurant seulement le parallélisme de la translation de la traverse de type panier (10) par rapport au plateau de chargement (1). Dans ce cas, la course de la traverse de type panier (10) est égale à la course du vérin (27).

Selon une seconde variante représentée sur les figures 8 et 9, l'actionneur (24) est un vérin (27) longitudinal centré, le synchronisme à élément cinématique de liaison (22) est alors peu sollicité, mais la position du vérin (27) peut présenter un encombrement désavantageux. L'actionneur (24) est alors relié sensiblement au milieu de la traverse de type panier (10) pour la déplacer longitudinalement.

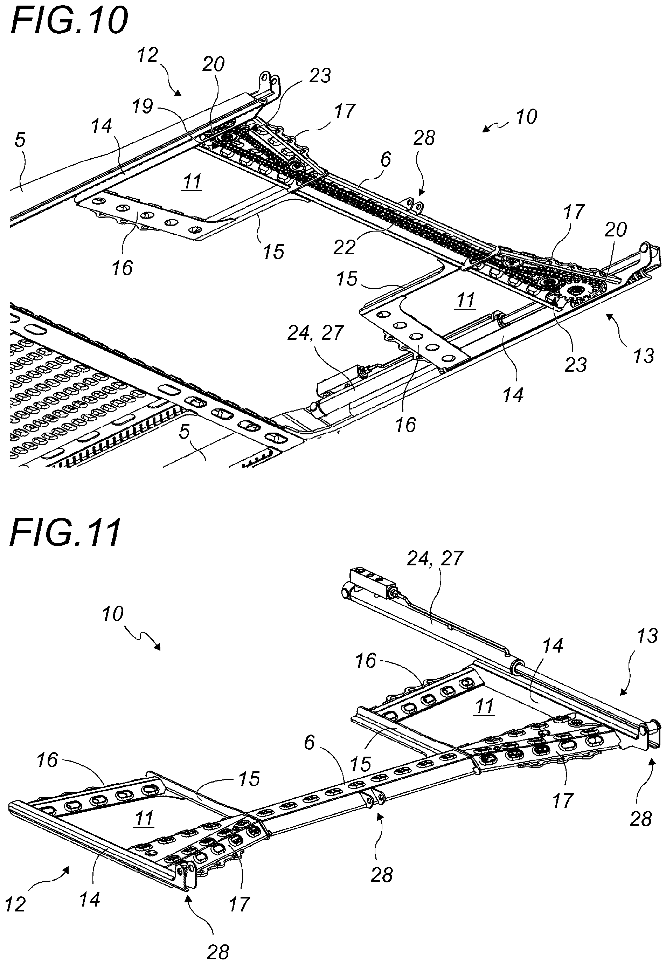

Selon une troisième variante représentée sur les figures 10 et 11, l'actionneur (24) est un vérin (27) longitudinal décentré et le synchronisme à élément cinématique de liaison (22) est alors très sollicité, mais le vérin (27) peut préférentiellement être prévu au niveau d'un des longerons (5), ce qui permet de le protéger et de réduire l'encombrement qu'il représente. Selon cette troisième variante, en raison de la présence du mécanisme à engrenages (23) et de l'élément cinématique de liaison (22) qui assurent le parallélisme de la translation de la traverse de type panier (10) par rapport au plateau de chargement (1), un actionneur (24) peut être prévu au niveau d'un seul des deux longerons (5), relié au niveau d'un des côtés de la traverse de type panier (10) pour la déplacer longitudinalement.

Selon un mode de réalisation préféré de l'invention, la traverse de type panier (10) présente des interfaces de montage et de fixation (28) pour trois positions de l'actionneur (24), à savoir à droite, à gauche, ou au centre, comme cela est visible sur les figures 9 et 11.

On notera également que, selon la place disponible, un actionneur (24) longitudinal peut indifféremment se prolonger vers l'avant ou vers l'arrière à partir de la traverse de type panier (10) à laquelle il est fixé. Ainsi, par exemple, le vérin (27) représenté sur la figure 10 se prolonge dans un sens, alors qu'il se prolonge dans le sens opposé sur la figure 11.

Sur la figure 12 est illustré un plateau de chargement (1) selon une variante de l'invention comportant deux traverses de type panier (10, 10b).

Sur cette figure, la traverse de type panier (10) qui est mobile en éloignement et en rapprochement longitudinal par rapport au reste du plateau de chargement (1) est montée de manière télescopique sur les deux longerons (5) longitudinaux et latéraux. Selon cette variante, la traverse de type panier (10) mobile comprend des bras longitudinaux (5b) qui sont montés télescopiques sur les extrémités des deux longerons (5) longitudinaux et latéraux.

Selon cette variante de l'invention, chacun des deux longerons (5) longitudinaux et latéraux renferme un mécanisme de manoeuvre (19) avec un actionneur (24), illustré à titre d'exemple sous la forme d'un vérin (27) longitudinal décentré, pour déplacer longitudinalement la traverse de type panier (10) en éloignement et en rapprochement longitudinal par rapport au reste du plateau de chargement (1).

Les deux mécanismes de manoeuvre (19) sont préférentiellement mutuellement asservis par un axe transversal (29) qui relie la poulie ou l'engrenage d'entraînement (25) des chacun des mécanismes de manoeuvre (19).

Sur cette figure 12, on notera que les pignons de translation (20) et la poulie ou l'engrenage d'entraînement (25) sont prévus verticaux, alors qu'ils sont habituellement horizontaux dans les autres variantes de l'invention. Les pignons de translation (20) sont montés en rotation dans la partie avant et dans la partie arrière des deux longerons (5) longitudinaux et latéraux pour s'engrener dans des encoches ou des crémaillères (30) prévues dans les bras longitudinaux (5b) de la traverse de type panier (10), ces bras longitudinaux (5b) étant reçus de manière télescopique dans les deux longerons (5) longitudinaux et latéraux.

Selon une variante préférentielle de l'invention, le plateau de chargement (1) peut être articulé au voisinage de l'une de ses extrémités, ou aux deux extrémités portant les zones support d'extrémité (7, 8).

Les articulations permettent avantageusement de conserver la rigidité de l'ensemble du plateau de chargement (1) après le réglage de l'inclinaison souhaitée de la zone-support d'extrémité.

Lorsqu'une voiture (3) est chargée sur ce plateau de chargement (1), il est ainsi possible d'abaisser l'un de ses trains de roues (2), ou ses deux trains de roues (2) simultanément, afin d'obtenir la configuration de chargement optimale conduisant à la meilleure imbrication possible de l'ensemble des voitures (3) transportées dans le véhicule ou conteneur porte-voiture (4).

Bien entendu, au sein d'un chargement, tous les plateaux de chargement (1) ne sont pas forcément articulés. Ainsi, selon le nombre et la nature des voitures (3) à transporter, certains plateaux de chargement (1) localisés à des endroits spécifiques de l'espace de chargement peuvent être articulés, alors que les autres ne le sont pas.

## Revendications

1. Plateau de chargement (1) destiné à supporter les quatre roues (2) d'une voiture (3) et à être chargée sur un véhicule ou conteneur porte-voiture (4), et comprenant :
- deux longerons (5) longitudinaux et latéraux reliés mécaniquement entre eux par des éléments transversaux (6),
- une première zone-support d'extrémité (7) située au niveau d'une première extrémité du plateau de chargement (1),
- une deuxième zone-support d'extrémité (8) située au niveau d'une deuxième extrémité du plateau de chargement (1), et
- un espace central libre (9) situé entre les longerons (5), la première zone-support d'extrémité (7) et la deuxième zone-support d'extrémité (8),
plateau de chargement (1) dans lequel :
- la première zone-support d'extrémité (7) comprend une première traverse de type panier (10) qui relie les deux longerons (5), cette traverse de type panier (10) étant mobile en coulissement ou de manière télescopique par des bras longitudinaux (5b) sur les deux longerons (5), ladite traverse de type panier comportant un panier (11) au niveau de chacune de ses extrémités latérales, ces deux paniers (11) étant situés entre les deux longerons (5), ces paniers (11) étant chacun formés par une niche réceptrice dans laquelle les roues (2) d'un premier train de roues de la voiture (3) s'enfoncent et se retrouvent calées en position de transport ;
- la deuxième zone-support d'extrémité (8) comprend un platelage (18) ou une seconde traverse de type panier, prévu(e) pour supporter les roues (2) d'un deuxième train de roues de la voiture (3) lorsque les roues (2) du premier train de roue sont enfoncées et calées dans les paniers (11) de la première traverse de type panier (10) ;
ledit plateau de chargement (1) comportant un mécanisme de manoeuvre (19) relié mécaniquement à la première traverse de type panier (10) pour la déplacer en éloignement et en rapprochement longitudinal par rapport à la deuxième zone-support d'extrémité (8) ; ledit plateau de chargement (1) étant **caractérisé en ce que** ce mécanisme de manoeuvre comprend : :
- des pignons de translation (20), ces pignons de translation (20) étant montés en rotation de part et d'autres de la traverse de type panier (10) et faisant saillie de ladite traverse de type panier (10) pour s'engrener dans des encoches (21) prévues dans les longerons (5) du plateau de chargement (1), ou étant montés en rotation dans les longerons (5) longitudinaux et latéraux et s'engrenant dans des encoches ou des crémaillères (30) prévues dans les bras longitudinaux (5b) de la traverse de type panier (10), ces bras longitudinaux (5b) étant reçus de manière télescopique dans les deux longerons (5) longitudinaux et latéraux,
- un élément cinématique de liaison (22, 29) qui relie directement ou indirectement les pignons de translation (20) et assure le synchronisme entre les pignons de translation (20), et
- au moins un actionneur (24) relié à l'élément cinématique de liaison (22) ou à la traverse de type panier (10), qui, lorsqu'il est actionné, provoque directement ou indirectement le déplacement de la traverse de type panier (10) en éloignement ou rapprochement longitudinal par rapport à la deuxième zone-support d'extrémité (8).

2. Plateau de chargement (1) selon la revendication 1, **caractérisé en ce que** chaque panier (11) est sous la forme de deux appui-roues transversaux (16, 17) reliés entre eux par deux rebords longitudinaux (14, 15) parallèles aux longerons (5).

3. Plateau de chargement (1) selon la revendication 1 ou la revendication 2, **caractérisé en ce que** chaque panier (11) est de forme trapézoïdale, le côté (15) le plus court de chaque trapèze étant dirigé vers l'intérieur du plateau de chargement (1).

4. Plateau de chargement (1) selon l'une quelconque des revendications précédentes, **caractérisé en ce que** ce que, au niveau de la première zone-support d'extrémité (7), les deux longerons (5) présentent des encoches (21) faisant office de crémaillère et **en ce que** le mécanisme de manoeuvre (19) comprend les moyens suivants :
- un mécanisme à engrenages (23) qui équipe chacun des paniers (11), comprenant chacun au moins une poulie ou un engrenage d'entraînement (25) et au moins un pignon de translation (20) faisant saillie latéralement vers l'extérieur en dehors dudit panier (11) et engrené dans les encoches (21) situées en vis-à-vis, ladite poulie d'entraînement ou ledit engrenage d'entraînement (25) et ledit pignon de translation (20) étant reliés mécaniquement en rotation ;
- un élément cinématique de liaison (22) relié cinématiquement à la poulie ou à l'engrenage d'entraînement (25) de chacun des deux mécanismes à engrenages (23) de sorte que l'élément cinématique de liaison (22) assure la rotation synchronisée des poulies ou engrenages d'entraînement (25) ;
- au moins un actionneur (24) relié à l'élément cinématique de liaison (22) pour l'entraîner à rotation autour des poulies ou engrenages d'entraînement (25) ou relié à la traverse de type panier (10) pour la déplacer longitudinalement de sorte que, lorsque l'actionneur (24) est actionné, la traverse de type panier (10) se déplace longitudinalement en éloignement ou rapprochement par rapport aux deux longerons (5).

5. Plateau de chargement (1) selon la revendication 4, **caractérisé en ce que** les encoches (21) sont découpées dans les longerons (5) ou sont rapportées sur ceux-ci par soudage.

6. Plateau de chargement (1) selon la revendication 4 ou 5, **caractérisé en ce que** les encoches (21) sont prévues sur la face interne des longerons (5).

7. Plateau de chargement (1) selon la revendication 4, **caractérisé en ce que** chaque mécanisme à engrenages (23) comporte une poulie ou un engrenage d'entraînement (25) relié(e) mécaniquement en rotation à un engrenage de renvoi (26), lequel engrenage de renvoi (26) est relié mécaniquement en rotation à un pignon de translation (20).

8. Plateau de chargement (1) selon la revendication 4, **caractérisé en ce que** l'élément cinématique de liaison (22) comprend une chaîne de liaison (22), un câble, une courroie crantée ou non, une sangle ou un arbre de liaison.

9. Plateau de chargement (1) selon la revendication 4, **caractérisé en ce qu'**au moins un actionneur (24) est un vérin (27) hydraulique, pneumatique ou électrique, un levier actionné manuellement, ou un moteur hydraulique, électrique ou pneumatique.

10. Plateau de chargement (1) selon la revendication 9, **caractérisé en ce qu'**au moins un actionneur (24) est prévu transversalement dans la traverse de type panier (10), sa tige de vérin (27) étant reliée à l'élément cinématique de liaison (22) pour l'entraîner autour desdit(e)s poulies ou engrenages d'entraînement (25) dans un sens ou dans l'autre selon que la tige de vérin (27) est déplacée en sortie ou en rentrée.

11. Plateau de chargement (1) selon la revendication 9, **caractérisé en ce que** chaque mécanisme à engrenages (23) surmultiplie la course de la tige du vérin (27).

12. Plateau de chargement (1) selon la revendication 11, **caractérisé en ce que** les deux mécanismes à engrenages (23) surmultiplient la course de la tige du vérin (27) dans un rapport compris entre 1,1 et 2, préférentiellement compris entre 1,2 et 1,8, plus préférentiellement dans un rapport d'environ 1,5.

13. Plateau de chargement (1) selon la revendication 4, **caractérisé en ce qu'**au moins un actionneur (24) est prévu longitudinalement de manière décentrée par rapport au plateau de chargement (1), ledit actionneur (24) étant relié au niveau d'un des côtés de la traverse de type panier (10) pour la déplacer longitudinalement.

14. Plateau de chargement (1) selon la revendication 4, **caractérisé en ce qu'**au moins un actionneur (24) est prévu longitudinalement dans un longeron (5).

15. Plateau de chargement (1) selon la revendication 4, **caractérisé en ce qu'**au moins un actionneur (24) est prévu longitudinalement de manière centrée par rapport au plateau de chargement (1), ledit actionneur (24) étant relié sensiblement au milieu de la traverse de type panier (10) pour la déplacer longitudinalement

## Patentansprüche

1. Ladeplatte (1), vorgesehen zur Aufnahme der vier Räder (2) eines Fahrzeugs (3) und zum Aufladen auf ein Fahrzeugtransportfahrzeug oder -container (4), und umfassend:
- zwei Längsträger (5) in Längsrichtung und seitlich, mechanisch über Querelemente (6) miteinander verbunden,
- eine erste Endabschnitt- Aufnahmezone (7), die sich in Höhe eines ersten Endabschnitts der Ladeplatte (1) befindet,
- eine zweite Endabschnitt-Aufnahmezone (8), die sich in Höhe eines zweiten Endabschnitts der Ladeplatte (1) befindet, und
- ein freier Zentralbereich (9), der sich zwischen den Längsträgern (5), der ersten Endabschnitt-Aufnahmezone (7) und der zweiten Endabschnitt-Aufnahmezone (8) befindet,
Ladeplatte (1), bei der:
- die erste Endabschnitt-Aufnahmezone (7) eine erste Querstrebe vom Korbtyp (10) enthält, die die beiden Längsträger (5) verbindet, diese Querstrebe vom Korbtyp (10) ist dabei durch Verschieben oder teleskopartig über Längsarme (5b) auf den beiden Längsträgern (5) beweglich, diese Querstrebe vom Korbtyp enthält dabei einen Korb (11) in Höhe jedes seiner seitlichen Enden, diese beiden Körbe (11) befinden sich zwischen den beiden Längsträgern (5), diese Körbe (11) werden jeweils gebildet aus einer Aufnahmenische, in der die Räder (2) eines ersten Fahrgestells des Fahrzeugs (3) einsinken und in der Transportposition verkeilt sind;
- die zweite Endabschnitt-Aufnahmezone (8) umfasst einen Belag (18) oder eine zweite Querstrebe vom Korbtyp, vorgesehen zur Aufnahme der Räder (2) eines zweiten Fahrgestells des Fahrzeugs (3), wenn die Räder (2) des ersten Fahrgestells in die Körbe (11) der ersten Querstrebe vom Korbtyp (10) eingesunken und verkeilt sind; diese Ladeplatte (1) enthält einen Bedienmechanismus (19). der mechanisch mit der ersten Querstrebe vom Korbtyp (10) verbunden ist, um sie bezogen auf die zweite Endabschnitt- Aufnahmezone (8) in Längsrichtung heranzuziehen oder wegzuschieben;
diese Ladeplatte (1) ist **dadurch gekennzeichnet, dass**, dieser Bedienmechanismus umfasst:
- Translationszahnräder (20), diese Translationszahnräder (20) sind drehbar beiderseits der Querstrebe vom Korbtyp (10) montiert, und ragen aus dieser Querstrebe vom Korbtyp (10) hervor und greifen in Kerben (21), die in den Längsträgern (5) der Ladeplatte (1) vorgesehen sind, oder sind drehbar an die Längs- und seitlichen Träger (5) montiert und greifen in Kerben oder Zahnstangen (30), die in den Längsarmen (5b) der Querstrebe vom Korbtyp (10) vorgesehen sind,
diese Längsarme (5b) sind teleskopartig in den beiden Längs- und seitlichen Trägern (5) untergebracht,
- ein kinematisches Verbindungselement (22, 29), das direkt oder indirekt die Translationszahnräder (20) verbindet und den Gleichlauf der Translationszahnräder (20) sicherstellt, und
- mindestens ein Stellglied (24), verbunden mit dem kinematischen Verbindungselement (22) oder der Querstrebe vom Korbtyp (10), das bei Betätigung direkt oder indirekt die Verschiebung der Querstrebe vom Korbtyp (10) veranlasst, um sie bezogen auf die zweite Endabschnitt-Aufnahmezone (8) in Längsrichtung heranzuziehen oder wegzuschieben.

2. Ladeplatte (1) nach Anspruch 1, **dadurch gekennzeichnet, dass** jeder Korb (11) die Form von zwei Radabstützungen in Querrichtung (16, 17) hat, die miteinander durch zwei Längskanten (14, 15) parallel zu den Längsträgern (5) verbunden sind.

3. Ladeplatte (1) nach Anspruch 1 oder Anspruch 2, **dadurch gekennzeichnet, dass** jeder Korb (11) trapezförmig ist, die kürzeste Seite (15) jedes Trapezes zeigt dabei ins Innere der Ladeplatte (1).

4. Ladeplatte (1) nach irgendeinem der vorstehenden Ansprüche, **dadurch gekennzeichnet, dass** in Höhe der ersten Endabschnitt-Aufnahmezone (7), die beiden Längsträger (5) Kerben (21) aufweisen, die als Zahnstange dienen und dadurch, dass der Bedienmechanismus (19) die folgenden Elemente enthält:
- ein Getriebe (23), das jeden der Körbe (11) ausrüstet, und mindestens eine Antriebsscheibe oder ein Antriebsgetriebe (25) und mindestens ein Translationszahnrad (20) enthält, das seitlich nach außen, außerhalb dieses Korbs (11) herausragt und in Kerben (21) eingerastet ist, die einander gegenüber angeordnet sind, diese Antriebsscheibe oder dieses Antriebsgetriebe (25) und dieses Translationszahnrad (20) sind mechanisch drehbar verbunden;
- ein kinematisches Verbindungselement (22), das kinematisch mit der Antriebsscheibe oder dem Antriebsgetriebe (25) jedes der beiden Getriebe (23) verbunden ist, so dass das kinematische Verbindungselement (22) die synchronisierte Rotation der Antriebsscheibe oder des Antriebsgetriebes (25) sicherstellt,
- mindestens ein Stellglied (24), verbunden mit dem kinematischen Verbindungselement (22), um es in Rotation um die Antriebsscheibe oder das Antriebsgetriebe (25) zu versetzen oder verbunden mit der Querstrebe vom Korbtyp (10), um sie in Längsrichtung zu verschieben, so dass, wenn das Stellglied (24) betätigt wird, die Querstrebe vom Korbtyp (10) bezogen auf die beiden Längsträger (5) in Längsrichtung herangezogen oder weggeschoben wird.

5. Ladeplatte (1) nach Anspruch 4, **dadurch gekennzeichnet, dass** die Kerben (21) in die Längsträger (5) eingeschnitten sind oder auf diese aufgeschweißt sind.

6. Ladeplatte (1) nach Anspruch 4 oder 5, **dadurch gekennzeichnet, dass** die Kerben (21) auf der Innenseite der Längsträger (5) vorgesehen sind.

7. Ladeplatte (1) nach Anspruch 4, **dadurch gekennzeichnet, dass** jedes Getriebe (23) eine Antriebsscheibe oder ein Antriebsgetriebe (25) enthält, die(das) mechanisch drehbar mit dem angetriebenen Getriebe (26), verbunden sind, dieses angetriebene Getriebe (26) ist mechanisch drehbar mit einem Translationszahnrad (20) verbunden.

8. Ladeplatte (1) nach Anspruch 4, **dadurch gekennzeichnet, dass** das kinematische Verbindungselement (22) eine Verbindungskette (22), ein Seil, einen Zahnriemen oder einfachen Riemen, einen Verbindungsgurt oder -welle enthält.

9. Ladeplatte (1) nach Anspruch 4, **dadurch gekennzeichnet, dass** mindestens ein Stellglied (24) ein hydraulischer, pneumatischer oder elektrischer Zylinder (27), ein manuell betätigter Hebel oder ein hydraulischer, elektrischer oder pneumatischer Motor ist.

10. Ladeplatte (1) nach Anspruch 9, **dadurch gekennzeichnet, dass** mindestens ein Stellglied (24) transversal in der Querstrebe vom Korbtyp (10) vorgesehen ist, seine Zylinderstange (27) ist dabei mit dem kinematischen Verbindungselement (22) verbunden, um es um diese Antriebsscheibe oder das Antriebsgetriebe (25) in die eine oder andere Richtung anzutreiben, je nach dem, ob die Zylinderstange (27) in Ausgangs- oder Rückzugsrichtung verschoben wird.

11. Ladeplatte (1) nach Anspruch 9, **dadurch gekennzeichnet, dass** jedes Getriebe (23) den Hub der Zylinderstange (27) vervielfacht.

12. Ladeplatte (1) nach Anspruch 11, **dadurch gekennzeichnet, dass** die beiden Getriebe (23) den Hub der Zylinderstange (27) in einem Verhältnis zwischen 1,1 und 2 vervielfachen, vorzugsweise zwischen 1,2 und 1,8, noch besser in einem Verhältnis von ungefähr 1,5 vervielfachen.

13. Ladeplatte (1) nach Anspruch 4, **dadurch gekennzeichnet, dass** mindestens ein Stellglied (24) in Längsrichtung außermittig, bezogen auf die Ladeplatte (1), vorgesehen ist, dieses Stellglied (24) ist in Höhe einer seiner Seiten mit der Querstrebe vom Korbtyp (10) verbunden, um sie in Längsrichtung zu verschieben.

14. Ladeplatte (1) nach Anspruch 4, **dadurch gekennzeichnet, dass** mindestens ein Stellglied (24) in Längsrichtung in einem Längsträger vorgesehen ist.

15. Ladeplatte (1) nach Anspruch 4, **dadurch gekennzeichnet, dass** mindestens ein Stellglied (24) in Längsrichtung mittig, bezogen auf die Ladeplatte (1) vorgesehen ist, dieses Stellglied (24) ist im Wesentlichen in der Mitte der Querstrebe vom Korbtyp (10) verbunden, um sie in Längsrichtung zu verschieben.

## Claims

1. A loading platform (1) intended to support the four wheels (2) of a car (3) and to be loaded on a car carrier vehicle or container (4), and comprising:
- two longitudinal and lateral longerons (5) mechanically connected therebetween by cross elements (6),
- a first end support area (7) located at a first end of the loading platform (1),
- a second end support area (8) located at a second end of the loading platform (1), and
- a free central space (9) located between the longerons (5), the first end support area (7) and the second end support area (8),
said loading platform (1) being **characterized in that**:
- the first end support area (7) comprises a first basket-type crossmember (10) which connects the two longerons (5), this basket-type crossmember (10) being slidably movable or telescopically movable by longitudinal arms on the two longerons (5), said basket-type crossmember comprising a basket (11) at each of its lateral ends, these two baskets (11) being located between the two longerons (5), these baskets (11) each being formed by a receiving recess into which the wheels (2) of a first set of wheels of the car (3) are inserted and wedged in the transport position;
- the second end support area (8) comprises a deck (18) or a second basket-type crossmember, intended to support the wheels (2) of a second set of wheels of the car (3) when the wheels (2) of the first set of wheels are inserted and wedged in the baskets (11) of the first basket-type crossmember (10);
- the loading platform (1) comprises a maneuvering mechanism (19) mechanically connected to the first basket-type crossmember (10) in order to move it longitudinally together and apart with respect to the second end support area (8), said loading platform (1) being **characterized in that** the maneuvering mechanism comprises:
- translational-movement pinions (20) which are rotatably mounted on both sides of the basket-type crossmember (10), these translational-movement pinions (20) projecting from said basket-type crossmember (10) to mesh with notches (21) provided in the longerons (5) of the loading platform 1) or are rotatably mounted in the longitudinal and lateral longerons (5) to mesh with the notches or racks (30) provided in the longitudinal arms (5b) of the basket-type crossmember (10), these longitudinal arms (5b) being received telescopically in the two longitudinal and lateral longerons (5)
- a kinematic connecting element (22, 29) which connects directly or indirectly the translational-movement pinions (20) and ensures the synchronism of the translational-movement pinions (20), and
- at least one actuator (24) connected to the kinematic connecting element (22) or to the basket-type crossmember (10), which, when actuated, causes directly or indirectly the longitudinal movement of the basket-type crossmember (10), together or apart with respect to the second end support area (8).

2. The loading platform (1) according to claim 1, **characterized in that** each basket (11) is in the form of two transverse wheel supports (16, 17) connected therebetween by two longitudinal edges (14, 15) parallel to the longerons (5).

3. The loading platform (1) according to claim 1 or claim 2, **characterized in that** each basket (11) is trapezoidal in shape, the shorter side (15) of each trapezium being directed towards the inside of the loading platform (1).

4. The loading platform (1) according to any one of the preceding claims, **characterized in that**, at the first end support area (7), the two longerons (5) have notches (21) acting as a rack and **in that** the maneuvering mechanism (19) comprises the following means:
- a gear mechanism (23) which is fitted to each of the baskets (11), each comprising at least one drive pulley or drive gear (25) and at least one translational-movement pinion (20) projecting laterally towards the outside out of said basket (11) and meshed with the facing notches (21), said drive pulley or drive gear (25) and said translational-movement pinion (20) being mechanically connected in rotation;
- a kinematic connecting element (22) kinematically connected to the drive pulley or drive gear (25) of each of the two gear mechanisms (23) so that the kinematic connecting element (22) ensures the synchronized rotation of the drive pulleys or drive gears (25);
- at least one actuator (24) connected to the kinematic connecting element (22) to rotate it about the drive pulleys or drive gears (25) or connected to the basket-type crossmember (10) to move it longitudinally so that, when the actuator (24) is actuated, the basket-type crossmember (10) moves longitudinally together and apart with respect to the two longerons (5).

5. The loading platform (1) according to claim 4, **characterized in that** the notches (21) are cut out of the longerons (5) or are welded onto them.

6. The loading platform (1) according to claim 4 or 5, **characterized in that** the notches (21) are provided on the inner side of the longerons (5).

7. The loading platform (1) according to claim 4, **characterized in that** each gear mechanism (23) comprises a drive pulley or drive gear (25) mechanically connected in rotation to a counter gear (26), which counter gear (26) is mechanically connected in terms of rotation to a translational-movement pinion (20).

8. The loading platform (1) according to claim 4, **characterized in that** the kinematic connecting element (22) comprises a connecting chain (22), a cable, a toothed or toothless belt, a strap or a connecting shaft.

9. The loading platform (1) according to claim 4, **characterized in that** at least one actuator (24) is a hydraulic, pneumatic or electric cylinder (27), a manually operated lever, or a hydraulic, electric or pneumatic motor.

10. The loading platform (1) according to claim 9, **characterized in that** at least one actuator (24) is provided transversely in the basket-type crossmember (10), its cylinder rod (27) being connected to the kinematic connecting element (22) in order to drive it around said drive pulleys or drive gears (25) in one direction or the other depending on whether the cylinder rod (27) is moved out or in.

11. The loading platform (1) according to claim 9, **characterized in that** each gear mechanism (23) overdrives the stroke of the cylinder rod (27).

12. The loading platform (1) according to claim 11, **characterized in that** the two gear mechanisms (23) overdrive the stroke of the cylinder rod (27) in a ratio of between 1.1 and 2, preferably between 1.2 and 1.8, more preferably in a ratio of about 1.5.

13. The loading platform (1) according to claim 4, **characterized in that** at least one actuator (24) is longitudinally provided off-centered with respect to the loading platform (1), said actuator (24) being connected to one of the sides of the basket-type crossmember (10) to move it longitudinally.

14. The loading platform (1) according to claim 4, **characterized in that** at least one actuator (24) is longitudinally provided in a longeron (5).

15. The loading platform (1) according to claim 4, **characterized in that** at least one actuator (24) is longitudinally provided centered with respect to the loading platform (1), said actuator (24) being connected substantially in the middle of the basket-type crossmember (10) to move it longitudinally.
